# EUROPEAN PATENT APPLICATION

(11) **EP 0 946 053 A1**
(43) Date of publication of application: **29.09.1999**
(21) Application number: 98400764.1
(22) Date of filing: 27.03.1998
(51) Int. Cl.: H04N 5/00

(54) **Memory management in a receiver/decoder**

(71) Applicant: CANAL+ Société Anonyme, 75711 Paris Cedex 15 (FR)
(72) Inventor: Meric, Jerome, 60300 Senlis (FR); Declerck, Christophe, 28210 Senantes (FR)
(74) Representative: Cozens, Paul Dennis

(57) **Abstract**

A device management module 11 particularly for use in a receiver/decoder for a broadcast digital television system in which received signals are passed through a receiver to the receiver/decoder and thence to a television set. The module 11 couples incoming messages from port units 10 to application modules 12. A memory 13 coupled to the unit 11 has a buffer area 13-Band and a FIFO area 13-F, controlled by a buffer controller/handler 14-B and a FIFO controller/handler 14-F respectively. An incoming message can be passed into a buffer, and retrieved from the buffer by the application to which it is directed; two different operating modes are available for this. Alternatively, such a message can be passed to a FIFO; the FIFO handler acts as a low-level application which can pass the message on to a high-level application without that application having to take any action and without having to wait for the full message to be received. Messages passing through the FIFO are may be combined into an MPEG signal stream.

## Description

The present invention relates to a receiver/decoder, in particular to memory management therein and data transfer therein. The invention finds particular application in the interfacing of application programs to physical devices.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

In a broadcast digital television system, received signals are passed to a receiver/decoder and thence to a television set. As used herein, the term "digital television system" includes for example any satellite, terrestrial, cable and other system. The receiver/decoder decodes a compressed MPEG-type signal into a television signal for the television set. It is controlled by a remote controller handset, through an interface in the receiver/decoder. The receiver/decoder is used to process the incoming bit stream, and includes a variety of application modules which cause the receiver/decoder to perform a variety of control and other functions.

Such a receiver/decoder may have a variety of devices coupled to it, such as a card reader for the user to pass an authorization card through to confirm which services the user is authorized to use, a hand-held receiver control wand, a video display unit, and a second card reader for use with bank cards to allow the user to perform home banking functions. It may also have a variety of ports coupled to it, for example, a modem for access to the Internet and for conducting home banking transactions.

It has been proposed to provide the capability for a receiver/decoder to interface with a variety of different ports, such as a modem, a serial channel, a parallel channel, an MPEG (compressed and coded video signal) channel, swipe card readers, and so on. The receiver/decoder includes a virtual machine which includes a run-time engine. The virtual machine is coupled to a device manager which is in turn coupled to the physical interfaces of the various channels via devices and device drivers.

The present invention is more particularly concerned with a receiver/decoder having one or more application modules which are coupled to one or more ports or devices through which information can be passed to and from the application modules.

In general, the various ports have different characteristics, for example, in data rates (from a few bps (bits per second) for a hand-held receiver control wand to many Mbps (for an MPEG bitstream). It is therefore usual to provide a device management module which in effect forms an interface between the application modules and the ports. This allows the application modules to be simplified.

When an application module wishes to send information, it will often be able to control the transmission rate and other parameters in dependence on the conditions in the receiver/decoder. For the reception of information, however, the transmission rate will often be determined by external conditions. To avoid loss of information, therefore, the device management module will normally include buffering arrangements so that the incoming information is stored in a buffer until the receiving application module is ready to accept it.

The device management module may conveniently be designed to define or designate a variety of buffers, so allowing flexible communication arrangements between the application modules, the device management module, and the ports.

The basic principle of buffering in the receiver/decoder is that a memory section in a memory is designated as a buffer. Incoming data from the port is fed into the buffer, and the application module reads the information from the buffer. Depending on circumstances, the buffer size may be chosen to be large enough to accommodate most or all incoming messages, or the buffer may be operated cyclically, with two pointers, one for the point where fresh incoming data is written into the buffer and the other for the point where stored data is read from the buffer.

The main aim of the present invention is to provide improved message handling arrangements in systems of the above type.

Accordingly the present invention provides a receiver/decoder comprising:
at least one port for receiving messages;
a memory including a FIFO (first-in-first-out) section;
at least one application module; and
FIFO control means coupled to the or each port, the memory and the or each application operative in response to a message appearing at a port to write the message into the FIFO section of the memory and to read the message from the FIFO section of the memory out to an application module or to a further port.

This can allow for efficient passing of the incoming message to an application module with minimal interference with the operation of the application module.

The FIFO control means is preferably arranged to initiate the reading out of a message from the FIFO section of the memory to said application or to said further port before receipt of the message is complete.

The FIFO control means may be arranged to flush a message from the FIFO section.

The FIFO control means preferably includes occupancy detector means for detecting the state of occupancy of the FIFO. The occupancy detector means may detect overflow and underflow of the FIFO, and may further detect at least one threshold of impending overflow and underflow of the FIFO.

The FIFO section may comprise a plurality of FIFO buffers and the FIFO control means comprise a respective plurality of FIFO register control means.

The memory may further include a buffer section, and the receiver/decoder further include buffer control means operative in response to a message appearing at a port to write the message into the buffer section of the memory and in response to a control signal from an application module to read the message from the buffer to the application module.

The buffer control means may be operable in a bit stream mode in which an incoming bit stream is directed into the currently selected buffer area and is then switched between the two buffer areas as each buffer area in turn becomes full. The buffer control means may further be operable in a datagram mode in which the length of an incoming message is compared with the free space in the currently selected buffer area, and if that space is less than the length of the message, the other buffer area is selected.

The receiver/decoder may further include a video device application unit fed from the FIFO section and feeding a video chip unit which is also fed with a video bitstream.

The present invention also extends to a broadcast system comprising a receiver/decoder as aforementioned and means for transmitting messages to the receiver/decoder.

Various functions of the receiver/decoder may be implemented in hardware, for example in a dedicated integrated circuit; this may provide enhanced speed of operation. Preferably, however, at least some of the functions are implemented in software, preferably run by processing means which runs the applications; this allows greater flexibility, requires less components, and allows the receiver/decoder to be updated more readily.

A receiver/decoder embodying the invention will now be described, by way of example, with reference to the drawings, in which:
Figure 1 is a schematic diagram of interfaces of the receiver/decoder;
Figure 2 is a functional block diagram of the receiver/decoder;
Figure 3 is a simplified block diagram of the message management system in the receiver/decoder;
Figure 3A is a more detailed block diagram of the message management system showing the buffer sub-system;
Figure 3B is a more detailed block diagram of the message management system showing the FIFO sub-system;
Figure 4A is a simplified diagram of a buffer register unit;
Figure 4B is a simplified diagram of a FIFO register unit; and
Figure 5 is a block diagram showing how the message handling system can interact with the main MPEG bitstream.

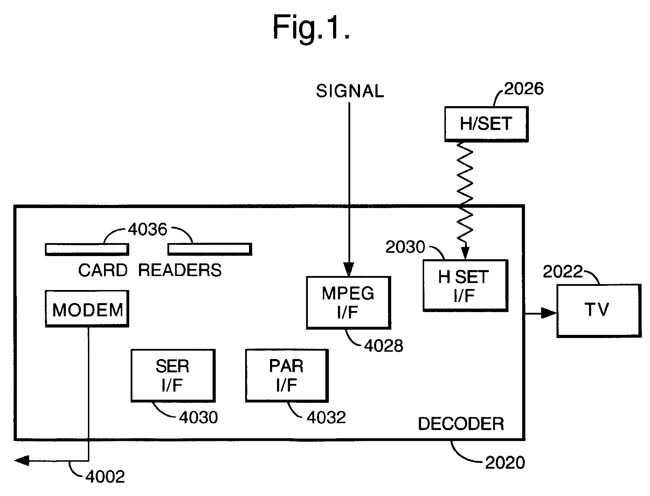

Referring to Figure 1, a receiver/decoder 2020 or set-top-box for use in a digital interactive television system is schematically depicted. Details of a suitable digital interactive television system may be found in our co-pending applications PCT/EP97/02106 - 02117, the disclosures of which are herein incorporated by reference. For ease of reference, parts described in more detail in the aforementioned specifications are generally designated by the reference numerals used in those specifications.

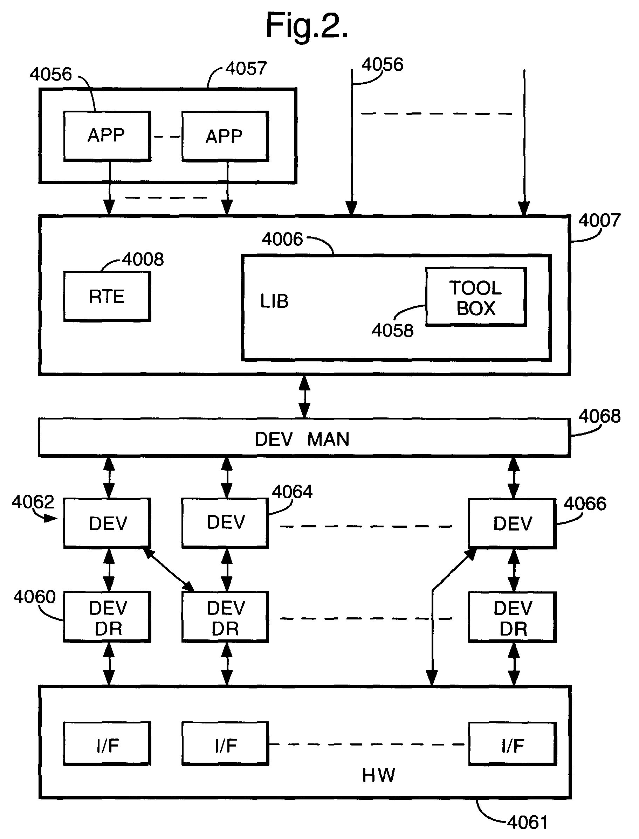

As described in more detail in the aforementioned specifications, referring to Figures 1 and 2, the receiver/decoder 2020 includes several ports; specifically, a tuner 4028 for the MPEG signal flow, a serial interface 4030, a parallel interface 4032, and two card readers 4036, one for a smartcard forming part of the system and one for bank cards (used for making payments, home banking, etc). The receiver/decoder also includes an interface 4034 to a modemmed back channel 4002 to the television signal producer, so that the user can indicate preferences, etc back to the television signal (programme) producer. The receiver/decoder also comprises a Run-Time-Engine 4008, a Device Manager 4068 and a plurality of Devices 4062 and Device Drivers 4060 for running one or more applications 4056.

In this description, an application is a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Applications are stored in memory locations in the receiver/decoder 2020 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The receiver/decoder can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061. The receiver/decoder hardware can be regarded as including the various ports as discussed above (the interface 2030 for the handset 2026, the MPEG stream interface 4028, the serial interface 4030, the parallel interface 4032, the interfaces to the card readers 4036, and the interface 4034 to the modemmed back channel 4002).

With specific reference to Figure 2, various applications 4056 are coupled to the virtual machine 4007; some of the more commonly used applications may be more or less permanently resident in the system, as indicated at 4057, while others will be downloaded into the system, eg from the MPEG data stream or from other ports as required.

The virtual machine 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware in the receiver/decoder 2020, such as hardware and software version numbers and available RAM space, and a function used when downloading a new device 4062. Functions can be downloaded into the library, being stored in FLASH or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

As will be described below, there are 3 forms of communication from the devices 4062 up to the run time engine: by means of variables, buffers, and events which are passed to a set of event queues.

Each function of the receiver/decoder 2020 is represented as a device 4062. Devices can be either local or remote. Local devices 4064 include smartcards, SCART connector signals, modems, serial and parallel interfaces, an MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

The run time engine 4008 runs under the control of the microprocessor and a common application programming interface. They are installed in every receiver/decoder 2020 so that all receiver/decoders 2020 are identical from the application point of view.

The engine 4008 runs applications 4056 on the receiver/decoder 2020. It executes interactive applications 4056 and receives events from outside the receiver/decoder 2020, displays graphics and text, calls devices for services and uses functions of the library 4006 connected to the engine 4008 for specific computation.

The run time engine 4008 is an executable code installed in each receiver/decoder 2020, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory 2028. Only the necessary code is loaded into the RAM or FLASH memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4062 or the device manager 4068. The manager gives the client a client number which is referred to in all accesses to the device. A device 4062 can have several clients, the number of clients for each device 4062 being specified depending on the type of device 4062. A client is introduced to the device 4062 by a procedure "Device: Open Channel". This procedure assigns a client number to the client. A client can be taken out of the device manager 4068 client list by a procedure "Device: Close Channel".

The access to devices 4062 provided by the device manager 4068 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

As noted above, the main loop of the run time engine is coupled to a variety of process sequencer units, and when the main loop encounters an appropriate event, control is temporarily transferred to one of the process sequencer units.

Thus, it can be seen that the receiver/decoder provides a platform having considerable flexibility in enabling an application to communicate with a variety of devices.

For present purposes, devices and ports are equivalent. Application modules need to transmit and receive information; that communication may be with devices (which are generally local and closely coupled to the buffer management system), or with ports (which are generally coupled to information sources which are remote and/or independent of the system). The term "port" will be used from hereon to include devices.

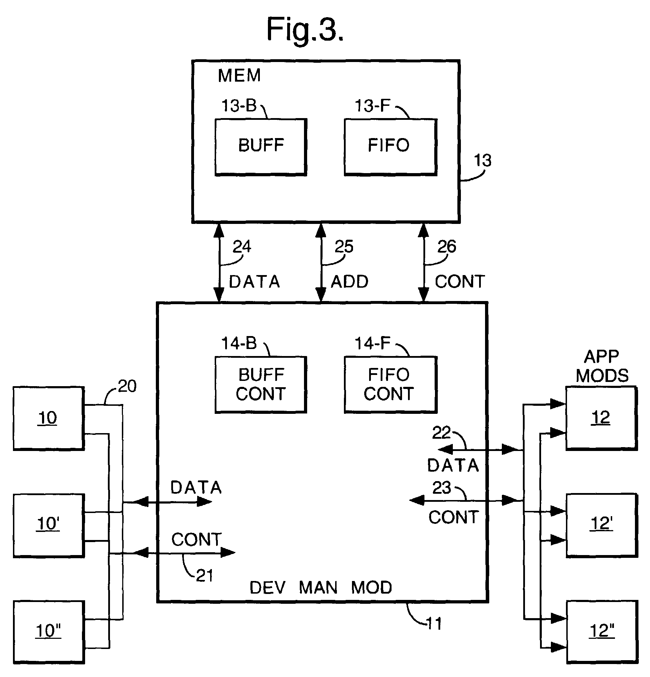

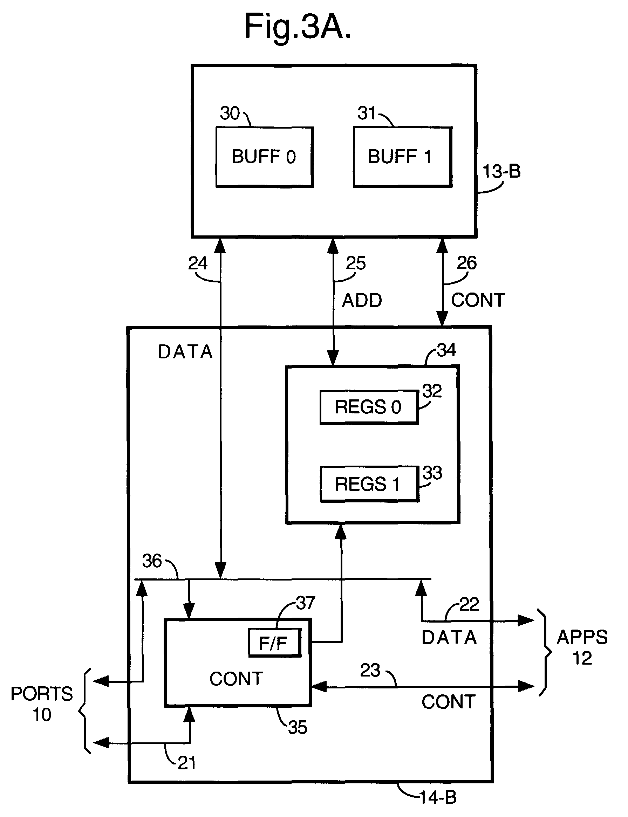

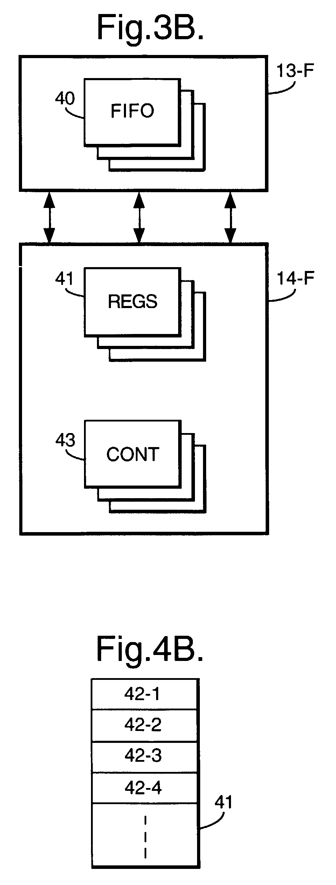

Referring now to Figure 3, the receiver/decoder comprises a plurality of port units 10, 10', 10'' coupled via a data bus 20 and control bus 21 to a device management module 11 which is in turn coupled via a data bus 22 and control bus 23 to a plurality of application modules 12, 12', 12''. The data management module 11 is also coupled via a data bus 24, an address bus 25, and a control bus 26 to a memory 13.

Messages passing between the ports and the applications may pass through either buffers or FIFOs (first in first out memory units). The memory 13 contains two memory areas, 13-B and 13-F, for buffers and FIFOs respectively, and the device management module 11 contains two controllers, 14-B and 14-F, for controlling the passage of messages through the buffers 13-B and the FIFOs 13-F respectively.

Buffers and FIFOs are set up and handled in basically the same way. A buffer or a FIFO is set up by a command which defines its characteristics (memory location, size, etc), and can similarly be erased. Once a buffer or a FIFO has been set up, it can then be used by ports and applications by the use of the procedures described above.

Considering first the handling of messages passing through the buffer registers, the buffer memory 13-B includes two buffer areas 30 and 31 (Figure 3A), which are defined by respective buffer register units 32 and 33 in a buffer address control unit 34 in the buffer controller 14-B in the device management module 11. The buffer controller in the device management module also contains a control unit 35 which controls the buffer address control unit 34. A data bus 36 couples all the data paths together in the device management module 11.

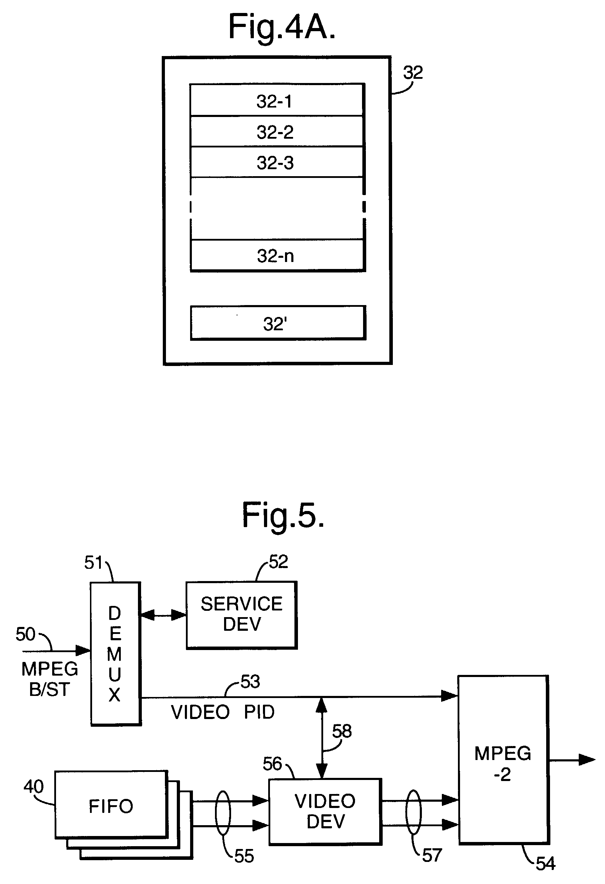

With reference to Figure 4A, each of the buffer register units contains a number of address registers 32-1, 32-2, ... 32-n. These registers include a top register 32-1 and a bottom register 32-n, which are pre-set and define the top and bottom of the respective buffer area in the memory 13, and a pointer register 32' which points to the point in the buffer area at which incoming data is to be written. (Thus the pointer register 32' points to the boundary, in the buffer area, between the part which contains data and the part which is empty.)

The various port units 10, 10', 10'' can initiate messages to the various application modules 12, 12', 12'' which are to be passed through the buffer registers 13-B. These messages may be of two basic types, bit streams and datagrams. The distinction between these two types of message is that a bit stream is a message of undefined length while a datagram is a message of predetermined length. The type of message may be determined by the source of the message (as indicated by the control signals accompanying the message), or by a message header (as monitored by the control unit 35 from the data bus 36).

Some port units may be able to initiate both types of messages; other may be able to initiate one or other type. When a port 10 wants to initiate a message, the device management module 11 selects that port 10 and the appropriate application module 12 in a conventional manner.

The control unit 35 has two modes of operation, depending on whether the incoming message is a bit stream or a datagram.

The control unit 35 includes a binary selector element or flip-flop 37 which selects which of the two buffer areas 30, 31 is to be used. For a bit stream, the control unit 35 directs the incoming bit stream into the currently selected buffer area 30 until it is filled. At that point, the control unit 35 changes the state of the selector element 37 to select the other buffer area 31, and directs the bit stream into that buffer area until that buffer area is filled. It then selects the first buffer area 30 again, and continues to switch or toggle between the two buffer areas until the bit stream ends.

It was said above that the control unit 35 selects one of the buffer areas 30, 31, directs the incoming bit stream into that buffer area 30, and so on, but it will of course be realized that that statement is in simplified terms. In more detail, the control unit 35 in fact selects one of the two buffer address register units 32, 33, uses the pointer register 32' in the selected unit 32 to select the addresses in the buffer area into which the incoming date is written, and toggles between the two buffer address register units 32, 33 as appropriate.

The control unit 35 also informs the application module 12 that the bit stream is being received. The application module 12 is expected to read the message, portion by portion, from the two buffer areas 30, 31 alternately, so that the buffer areas do not overflow (that is, so that data already in the buffer areas is read by the application module before fresh data coming in as part of the bit stream over-writes old data). The application module 12 may maintain one or more address registers for this reading, or an additional address register may be provided in each of the buffer address register units 32, 33 for that purpose. When the reading of the stored message is complete, the pointer address registers in the buffer address register units 32, 33 are reset.

For a datagram, the control unit 35 determines the length of the datagram, and interrogates the currently selected buffer address register unit to determine how much space is available in it. This free space value is obtained by determining the differences between the values in the top and pointer address registers. The control unit then compares the free space value with the length of the datagram, and if the datagram length is greater than that free space value, it changes the state of the selector element 37 to select the other buffer area.

If, in the bit stream mode, the incoming message overflows the buffer areas 30, 31, or if, in the datagram mode, neither buffer area has sufficient free space to accept the incoming message, then the system enters a fault mode in which message reception is inhibited or aborted. Suitable recovery action can then be taken, for example, calling for retransmission of the message if that is possible, or resetting the system to the state it was in before the message reception began.

Thus, for a bit stream, the incoming message is directed into whichever buffer area is currently selected, and if the incoming message overflows that area, it is automatically switched into the other buffer area, with the switching between the two buffer areas being repeated if necessary. With a datagram however, the complete incoming message is directed into a single buffer area.

This enables incoming messages of both arbitrary and known lengths to be accepted successfully, with a relatively simple organization of the buffer registers.

The buffers can also be used more generally for the transmission of messages between applications.

Turning now to the handling of messages passing through the FIFOs, the buffer memory 13-F includes a set of FIFOs 40 (Figure 3B), which are defined by respective FIFO register units 41 in the FIFO controller 14-F in the device management module 11. Data passes to and from the FIFOs 40 over the data bus 24, which is coupled to the data bus 36 (Figure 3A). The FIFO controller 14-F in the device management module also includes a set of FIFO control units 43, which control the writing of messages into the FIFOs 40 and the reading of those messages from the FIFOs.

With reference to Figure 4B, each of the FIFO register units 41 contains a number of address registers 42-1, 42-2, ... 42-n. These registers include a top register 42-1 and a bottom register 42-2, which are pre-set and define the top and bottom of the respective FIFO area in the memory 13, a write pointer register 42-3 which points to the point in the FIFO area at which incoming data is to be written, and a read pointer register 42-4 which points to the point in the FIFO area from which already stored data is to be read.

Considering the device manager generally, therefore, messages can be passed from ports to applications, from applications to ports, and between applications, using either buffers or FIFOs.

Buffer usage is controlled by top level applications. The system is event based; that is, when a message is being passed to a top level application, the application awaits the receipt of a "buffer ready" message from the buffer manager 14-B before taking any action towards reading the contents of the buffer. With this arrangement, independent communication between ports is not possible. Further, the system can be somewhat unresponsive, since a buffer needs to be filled by one port before another port can read its contents.

With FIFOs, the usage is controlled by the FIFO control units 43 in the FIFO controller or handler 14-F. Information is written into a FIFO 40 and read out of it under the control of the FIFO handler 14-F, including the corresponding FIFO control unit 43. Data transfer is therefore under the control of the FIFO handler 14-F instead of being controlled by the application 12. A stream of information can therefore flow directly between two ports 10, as well as between a port 10 and an application 12.

Data is written into the FIFO 40 and read from it using the write and read pointers 42-1 and 42-2. These pointers are controlled by the FIFO handler 14-F. This allows the reading and writing of the FIFO 40 to be carried out independently. That is, the port 10 or application 12 does not have to have any information regarding the origin of the message being read from the FIFO 40. The reading out of information from the FIFO 40 may start before the FIFO 40 is full or before the message has been fully received and written into the FIFO 40. This allows a substantially continuous flow of information to be achieved. The reading out of information from the FIFO 40 need not be continuous; the reading can be stopped and re-started at any time.

The FIFO handler 14-F checks that the information being written into the FIFO 40 starts at the FIFO bottom address and does not go on beyond the FIFO top address. The precise manner in which a FIFO 40 is operated may depend on the particular use being made of it. Thus a FIFO 40 can be operated on a single message basis, with the start of each message being written into the FIFO bottom address. Alternatively, a FIFO 40 may be operated cyclically, with the start of a new message being written immediately above the end of the previous message, and the top and bottom of the FIFO being treated as contiguous.

If messages are longer than the length of the FIFO 40 or a message starts to arrive before the previous message has been fully read from the FIFO 40, there is a potential danger of conflict. The FIFO control units 43 monitor for such conflict. In the event of conflict being detected, the FIFO control unit 43 may of course send a suitable control signal to the source of the message (eg a port 10), the destination of the message (eg an application 12), or both.

An actual conflict arises if the write pointer register 42-3 catches up with the read pointer register 42-4, or if the read pointer register 42-4 catches up with the write pointer register 42-3. However, the FIFO control unit 43 may be arranged to detect potential conflicts, that is, if the write pointer register 42-3 approaches within a certain distance of the read pointer register 42-4 or vice versa. The device management module 11 may set these distances (thresholds) for the FIFO control units 43. The overflow and underflow thresholds for a FIFO 40 need not be the same, and the thresholds for different FIFOs 40 need not be the same. It is also possible for there to be two or more overflow and/or underflow thresholds, to give progressively more urgent warnings as actual overflow or underflow is approached.

In addition, the FIFO control unit 43 may contain a flag which is settable, in the event of overflow, either to permit over-writing or to suspend further writing. The former effectively flushes old information from the FIFO 40. Such flushing will often be desirable, to permit the continued processing of the information flow.

A FIFO control unit 43 can be regarded as a low level application (or in some circumstances as a device) which performs transfer functions on behalf of a high level application. The high level application is relieved of the transfer functions, and the messages being transferred are in effect supplied automatically to the high level application, which can use them directly without having to concern itself with obtaining them.

Figure 5 shows how the FIFOs can be used to generate video signals which are combined with the video signals of the main MPEG bitstream. The message handling system of Figures 3, 3B, and 4B is used to stream data received from an MPEG device source directly into a video device, without needing any input from the upper layer application.

An MPEG bitstream (which will normally be the bitstream received from the tuner 4028, Figure 1) is fed, over line 50, to a demultiplexer 51 which is coupled to a Service device 52. The function of device 52 is to set up the video; that is, to obtain information about the main video set-up and control its display. The demultiplexer 51 is controlled to extract the main video sequence (video PID sequence) from the MPEG video bitstream. This main video sequence is fed on line 53 to an MPEG-2 chip 54.

In addition, video MPEG-2 bitstreams can be extracted from one or more of the FIFOs 40, on lines 55. These bitstreams are passed to a Video device 56, which is coupled to the main video signal on line 53. The bitstreams on lines 55 are processed by the Video device 56 and emerge as auxiliary video sequences, on lines 57, which are fed to the MPEG-2 chip 54. The video sequences are displayed only into the MPEG layer.

Each video sequence of the MPEG layer has its own alpha blending coefficient, which is applied to each pixel of the image for mixing with the corresponding pixel of the background layer. Parts of the MPEG layer which are not used are completely transparent.

The precise details of the implementation of the various functions described above, and their distribution between hardware and software, are a matter of choice for the implementor and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features should be straightforward for one skilled in the art, and the precise details are left to the implementor. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

To summarise the preferred embodiment of the present invention, there is provided a device management module 11 particularly for use in a receiver/decoder for a broadcast digital television system in which received signals are passed through a receiver to the receiver/decoder and thence to a television set. The module 11 couples incoming messages from port units 10 to application modules 12. A memory 13 coupled to the module 11 has a buffer area 13-B and a FIFO area 13-F, controlled by a buffer controller/handler 14-B and a FIFO controller/handler 14-F respectively. An incoming message can be passed into a buffer, and retrieved from the buffer by the application to which it is directed; two different operating modes are available for this. Alternatively, such a message can be passed to a FIFO; the FIFO handler acts as a low-level application which can pass the message on to a high-level application without that application having to take any action and without having to wait for the full message to be received. Messages passing through the FIFO are may be combined into an MPEG signal stream.

It will be understood that the present invention has been described above purely by way of example, and modifications of detail can be made within the scope of the invention. Each feature disclosed in the description, and (where appropriate) the claims and drawings may be provided independently or in any appropriate combination.

## Claims

1. A receiver/decoder comprising:
at least one port for receiving messages;
a memory including a FIFO section;
at least one application module; and
FIFO control means coupled to the or each port, the memory, and the or each application operative in response to a message appearing at a port to write the message into the FIFO section of the memory and to read the message from the FIFO section of the memory out to an application module or to a further port.

2. A receiver/decoder according to claim 1 wherein the FIFO control means is arranged to initiate the reading out of a message from the FIFO section of the memory to said application module or to said further port before receipt of the message is complete.

3. A receiver/decoder according to claim 1 or 2 wherein the FIFO control means includes occupancy detector means for detecting the state of occupancy of the FIFO.

4. A receiver/decoder according to claim 3 wherein the occupancy detector means is adapted to detect overflow and underflow of the FIFO.

5. A receiver/decoder according to either of claims 3 and 4 wherein the occupancy detector means is adapted to detect at least one threshold of impending overflow and underflow of the FIFO.

6. A receiver/decoder accrding to any preceding claim, wherein the FIFO control means is arranged to flush a message from the FIFO section.

7. A receiver/decoder according to any preceding claim wherein the FIFO section comprises a plurality of FIFO buffers and the FIFO control means comprises a respective plurality of FIFO register control means.

8. A receiver/decoder according to any preceding claim wherein the memory further includes a buffer section, and the receiver/decoder includes buffer control means operative in response to a message appearing at a port to write the message into the buffer section of the memory and in response to a control signal from an application module to read the message from the buffer to the application module.

9. A receiver/decoder according to Claim 8 wherein the buffer control means is operable in a bit stream mode in which an incoming bit stream is directed into the currently selected buffer area and is then switched between the two buffer areas as each buffer area in turn becomes full.

10. A receiver/decoder according to claim 8 or 9 wherein the buffer control means is operable in a datagram mode in which the length of an incoming message is compared with the free space in the currently selected buffer area, and if that space is less than the length of the message, the other buffer area is selected.

11. A receiver/decoder according to any preceding claim including a video device application unit fed from the FIFO section and feeding a chip unit which is also fed with a video bitstream.

12. A broadcast system comprising a receiver/decoder according to any preceding claim and means for transmitting messages to the receiver/decoder.
